# EUROPEAN PATENT SPECIFICATION

(11) **EP 2 472 795 B1**
(45) Date of publication and mention of the grant of the patent: **14.03.2018**
(21) Application number: 09848637.6
(22) Date of filing: 17.12.2009
(51) Int. Cl.: H04L 12/70, H04L 12/437, H04L 12/707, H04L 12/703

(54) **METHOD AND SYSTEM FOR RE-BUILDING SINGLE RING NETWORK TOPOLOGY**
VERFAHREN UND SYSTEM FÜR DEN WIEDERAUFBAU EINER EINZELRINGNETZWERKTOPOLOGIE
PROCÉDÉ ET SYSTÈME POUR RECONSTRUIRE LA TOPOLOGIE D UN RÉSEAU À ANNEAU UNIQUE

(30) Priority: 25.08.2009 CN 200910167562
(43) Date of publication of application: 04.07.2012
(73) Proprietor: ZTE Corporation, Shenzhen, Guangdong 518057 (CN)
(72) Inventor: ZHANG, Kai, Shenzhen Guangdong 518057 (CN); LENG, Weijie, Shenzhen Guangdong 518057 (CN)
(74) Representative: Novagraaf Technologies
(86) International application number: PCT/CN2009/075682
(87) International publication number: WO 2011/022905

(56) References cited:
- WO-A1-2007/043919
- WO-A2-03/077459
- CN-A- 1 812 361
- CN-A- 1 870 558
- US-A1- 2001 021 177
- US-A1- 2004 017 770
- US-A1- 2005 207 348
- US-A1- 2008 101 219
- US-A1- 2009 207 726
- US-A1- 2009 207 726

## Description

### Field of the invention

The invention relates to the field of communications, and in particular to a method and a system for rebuilding single ring network topology.

### Background of the invention

As a two-layer protocol, spanning-tree protocol (STP) discovers the physical loops in the network through a dedicated algorithm, and produces a logic loop-free network topology. The main functions of the STP include:
(1) The STP maintains a loop-free network to avoid network storm, and if an equipment discovers loops in a topology, one or more redundant ports will be blocked by the equipment, so that the ring topology will be switched to a tree topology.
(2) When the network topology changes, the STP will reallocate ports of the bridge to avoid link loss or generation of new loops.

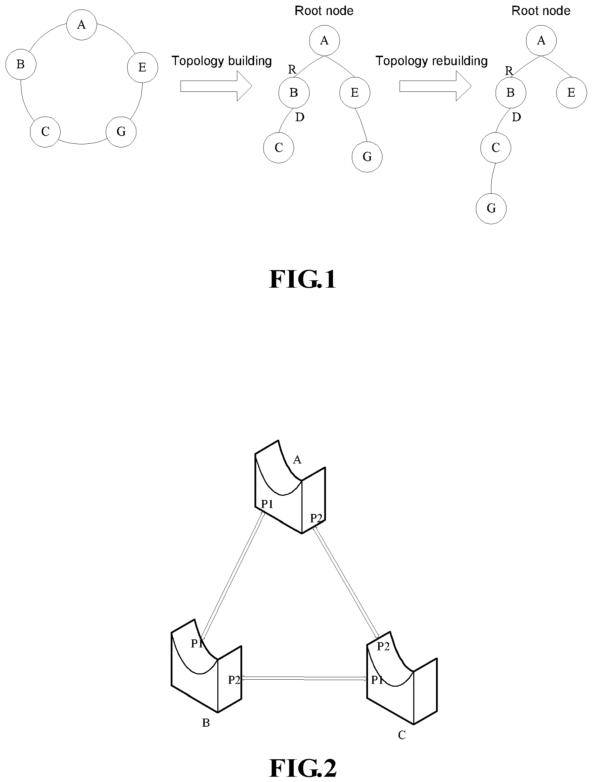

Please refer to Fig. 1 for the diagrams of the implementation of above two functions of the STP, and Fig. 1 shows the diagram of a STP-based network topology rebuilding process in the relative art. As shown in Fig. 1, the ring network topology is switched to a tree topology, that is, the form of topology is switched to that shown in the second picture from that shown in the first picture in the Fig. 1. When a link between node G and node E is failed, a network topology rebuilding process is started, and the network topology structure is switched to the form shown in the third picture from that shown in the second picture.

To understand the STP clearly, several key concepts in the STP are first introduced:
(1)root bridge, (2) root port, and (3) designated port. With reference to Fig. 1, the root bridge is the root node of the tree structure, i.e., node A as shown in Fig. 1; the root port is a port on a non-root bridge, which forwards data frames towards the root bridge direction (namely, parent node), there is only one root port on each non-root bridge, for example, the one connected with node A in the two ports of node B as shown in Fig. 1 (port R as shown in the figure); the designated port is a port on the root bridge or non-root bridge, which forwards data towards the sub-node direction, for example, the another port of node B (port D as shown in the figure). Wherein, all ports of the root bridge (node A) are designated ports. In the STP, the role of each node and the state of ports in the node are generated through selection, the selection process is that some parameters of nodes are compared and then the root bridge, the root port and the designated ports are selected by the BPDU. Four states of ports are specified in the STP: blocking, listening, learning and forwarding (also called forwarding state). Wherein blocking is a congestion state, that is, data forwarding is unavailable, forwarding means a state in which data forwarding is available, other two states are intermediate states for switching blocking state to forwarding state. As it is specified in the STP that only the root port and the designated port can be used for data forwarding, the root port and the designated port are set in forwarding state and other ports in blocking state, the topology building process ends after the port state of each node is stable. The existing STP follows the IEEE 802.ID standard, thus reference is made to the standard for the specific selection process. Besides the several key concepts, there are also several key time parameters specified in the STP:
   (1) Hello time: interval for sending standard network bridge protocol data unit (BPDU) messages.
   (2) Forwarding delay: there are four states of ports specified in the STP: blocking, listening, learning and forwarding. Forwarding delay is the duration of the listening or learning state, the default value is 15 seconds.
   (3) Max age: the maximum survival period, which means the maximum effective time of the BPDU messages, the default value is 20 seconds.

In the STP, through above time parameters, the sending of the standard BPDU messages, the switching of states and the judgment when to rebuild topology are controlled.

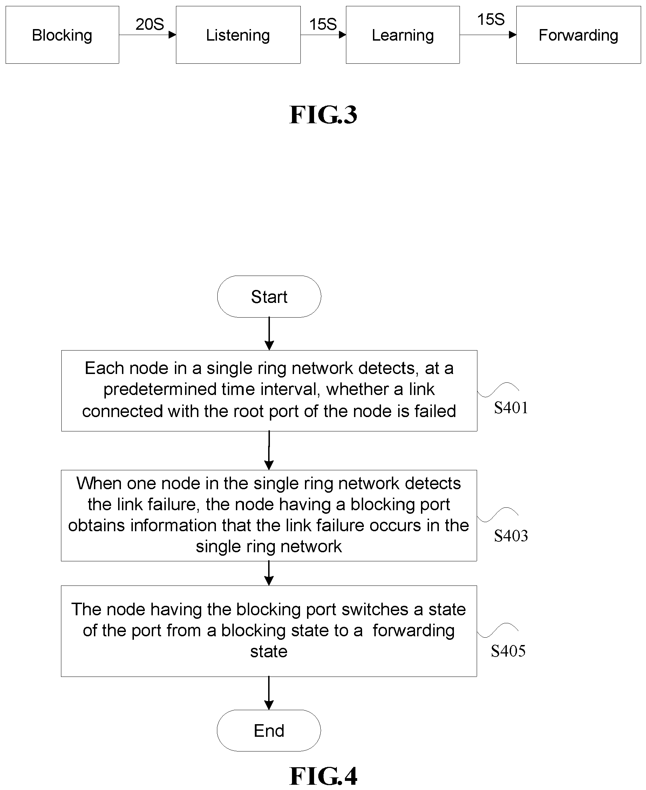

The biggest problem of the standard STP is that the convergence time is too long when the topology changes. According to the STP, the topology rebuilding procedure is as follows: it is assumed that there are three network bridges running the STP, and the three network bridges are connected into a ring network as shown in Fig. 2, after the finish of the selection process, port P1 of the network bridge C stays in the blocking state. If the link connecting bridge A and bridge C is failed, port P2 of the network bridge C is unable to receive the standard BPDU messages, as a result, the storage time of the standard BPDU messages in port P2 exceeds the max age, the network bridge C performs the selection process again. At this moment, according to the STP, port P1 will be selected as a designated port, in this way, port P1 will be switched into the forwarding state from the blocking state, according to the state switching diagram as shown in Fig. 3, this process will take two forwarding delay times. It can be seen that, according to the standard STP, the time for the topology rebuilding needs 50 seconds at most according to the default value.

From the analysis of the STP protocol, it can be known that: the character of the STP determines that the determinant factors of the topology rebuilding speed include several time parameters instead of selection process no matter how complicated or simple the network topology structure is. In fact, the ports of the network bridges rapidly select the states of themselves, and most of the time is spent on the discovery of the change of the network topology and the state switching of ports. While the selection of these time parameters is related to the number of nodes in the network and the network topology, continuous decrease of the time parameters may cause that the network topology cannot be built stably, simultaneously, the potential of decreasing the time parameters is limited. The major cause for long convergence time of the standard STP is the characteristic of passive wait. For example, the network bridge just takes very short time in the listening stage to know that a certain primarily blocking port will not produce any loop after entering the forwarding state, it is unable to enter the learning state immediately, and it can enter the learning state after waiting for 15 seconds of forwarding delay; if the port of the network bridge just takes very short time in the learning stage to learn all MAC addresses, it is also unable to enter the forwarding state, because it also needs to wait for 15 seconds of forwarding delay.

### Summary of the invention

The invention is proposed in allusion to the problem of slow convergence speed during STP-based network topology rebuilding in the traditional art Therefore, one aspect of the invention is to provide an improved method and system for rebuilding network topology, as defined in claims 1 and 3, to solve at least one of above problems.

A method for rebuilding single ring network topology is provided according to one aspect of the invention.

The method for rebuilding single ring network topology according to the invention comprises: each node in a single ring network detects, at a predetermined time interval, whether a link connected with a root port of the node is failed; when one node in the single ring network detects the link failure, the node having a blocking port obtains information that the link failure occurs in the single ring network; the node having the blocking port switches a state of the port from a blocking state to a forwarding state.

A system for rebuilding single ring network topology is provided according to another aspect of the invention.

The system for rebuilding single ring network topology according to the invention comprises a plurality of nodes, which comprise a node having a blocking port, wherein, the plurality of nodes are used for detecting, at a predetermined time interval, whether a link connected with a root port of the node is failed; the node having the blocking port is used for obtaining information that the link failure occurs in the single ring network when one node in the single ring network detects the link failure, and switching a state of the port from a blocking state to a forwarding state.

Through the invention, each node in the single ring network actively detects whether the link connected with the root port of the node is failed; when one node in the single ring network detects the link failure, the node having a blocking port obtains the information that the link failure occurs in the single ring network, and the node having the blocking port switches the state of the port in a blocking state to a forwarding state, so that the problem of slow convergence speed during the STP-based network topology rebuilding in the traditional art is solved. Further, the passive wait for obtaining the link failure can be changed into the active detection for the link failure, and the state of the port in the blocking state is directly switched to the forwarding state, therefore, the convergence speed is accelerated.

Other features and advantages of the invention will be described in the following description and will be apparent partially from the description or understood through implementation of the invention. The purpose and other advantages of the invention can be implemented and obtained through the structures particularly specified in the description, claims and drawings herein.

### Brief description of the drawings

The drawings, provided for further understanding of the present invention and forming a part of the specification, are used to explain the present invention together with embodiments of the present invention rather than to limit the present invention, wherein
Fig. 1 shows a schematic diagram illustrating a STP-based network topology rebuilding process in traditional art;
Fig. 2 shows a schematic diagram illustrating a single ring network comprising three nodes;
Fig. 3 shows a STP state switching diagram of ports of a node;
Fig. 4 shows a flowchart illustrating the method for rebuilding single ring network topology according to the embodiments of the invention;
Fig. 5 shows a flowchart illustrating the method for rebuilding single ring network topology according to the preferred embodiment of the invention;
Fig. 6 shows a flowchart illustrating the system for rebuilding single ring network topology according to the embodiments of the invention;
Fig. 7 shows a function structure block diagram of nodes in the single ring network according to the preferred embodiment of the invention; and
Fig. 8 shows the structure diagram of the system for rebuilding single ring network topology according to the preferred embodiment of the invention.

### Detailed description of the embodiments

### Summary of functions

The embodiment of the invention provides a solution for rebuilding single ring network topology. For the single ring network, each node only has two ports. In allusion to the feature of STP topology rebuilding that most of the time is spent on the discovery of the change of the network topology and the state switching of ports, and in conjunction with the characteristics of the single ring network, the following optimization directions are obtained:
(1) When the topology changes, the new configure message can be transferred to the whole network after a certain time delay, this time delay is called forwarding delay, the default value of the time delay in the protocol is 15s. Before all network bridges receive the message about the change of the topology, if the port in the forwarding state in the old topology structure is unaware that it should stop forwarding in the new topology, then a temporary loop may exist. In order to solve the problem of temporary loop, a timer policy is employed in the spanning tree, an intermediate state, namely, the learning state, in which just MAC addresses are learned but no forwarding is executed is added from the blocking state to the forwarding state. This problem does not exist under single loop, and the learning state can be skipped.
(2) After the link is failed, it is necessary to wait for 20s at most to discover that the link changes according to the STP. If it can be discovered once the link is failed and the topology change processing procedure can be performed forcedly, the 20s of rebuilding time at most can be saved.
(3) Due to single ring network, there is only one node having a port which is in the blocking state in the system, if the link is failed, and then the blocking port is the only path through which the node connected with the blocking port communicates with the root node. Therefore, when a link failure is detected, the port in the blocking state is directly switched to the forwarding state, skipped from the listening and learning (no learning state after optimization) states.

It should be noted that the embodiments of the application and the features in the embodiments can be combined if not conflict. The invention will be described in details below with reference to drawings in conjunction with embodiments.

### Embodiments of the method

Firstly, a method for rebuilding single ring network topology is provided according to the embodiments of the invention.

Fig. 4 shows a flowchart illustrating the method for rebuilding single ring network topology according to the embodiments of the invention. As shown in Fig. 4, the method for rebuilding single ring network topology according to the embodiments of the invention comprises the following processing (S401-S405):
S401: Each node in the single ring network detects, at a predetermined time interval, whether the link connected with the root port of the present node is failed.

According to the standard STP, when the link is failed, it has to passively wait until the BPDU message from the root port reaches the max age and expires, and then the topology change information can be transferred to the root bridge direction.

Preferably, the link state of the root port can be detected actively according to the technical solution provided by the embodiment of the invention. After the root port of a certain network bridge detects the link failure (for example, detects the handshake signal and the like), in terms of software implementation, the timer, namely, the max age timer which controls the expiry of the BPDU is actively expired, and the topology change message is transmitted to the whole topology structure. Wherein, the way for active detection includes but not limited to: detection at predetermined time which can be set according to the actual demands.

S403: When one node in the single ring network detects a link failure, the node having a blocking port obtains the information that the link failure occurs in the single ring network. Preferably, if a link connected with the root port of the node having the blocking port is failed, the node actively detects that the link connected with the root port of the node is failed.

Preferably, if a link connected with the root port of the node having the non-blocking port is failed, the node having the non-blocking port detects that the link connected with the root port of the node is failed; then, the node having the non-blocking port transmits a self-defined BPDU message to the next node through a reelected designated port until reaching the node having the blocking port; and the node having the blocking port receives the BPDU message and acquires the information that the link failure occurs in the network.

Wherein, the type of the self-defined BPDU message is different from that of the standard BPDU message. For example, the fields of identifying types in the BPDU message can be modified.

S405: The node having the blocking port switches the state of the port in a blocking state to a forwarding state.

Due to single ring network, there is only one node having a port which is in the blocking state in the system, if the link is failed, the blocking port is the only path through which the node connected with the blocking port communicates with the root node. Therefore, when a link failure is detected, the port in the blocking state is directly switched to the forwarding state, while the state of other ports is kept unchanged.

When a certain port detects the topology change, in order to notify the topology change message to the network bridge having a port in the blocking state quickly, a BPDU message (self-defined BPDU message) of nonstandard type is added to transfer the topology change message according to the technical solution provided by one embodiment of the invention. The type domain of such BPDU is different from the configured BPDU and TCN BPDU, when a certain node discovers a link failure, and if the node has no port in the blocking port, the BPDU of nonstandard type is sent through the designated port of the node, other nodes make the max age timers thereof expired after receiving such type BPDU, this process is repeated until there is a node having a port in the blocking state.

Preferably, if a new node has to be added-in during the topology rebuilding, for a node to be added in the single ring network, when the port of the node is in the blocking state, the state of the port is switched to the forwarding state through the listening state. That is, the learning state is skipped, thus 15s can be saved according to the STP.

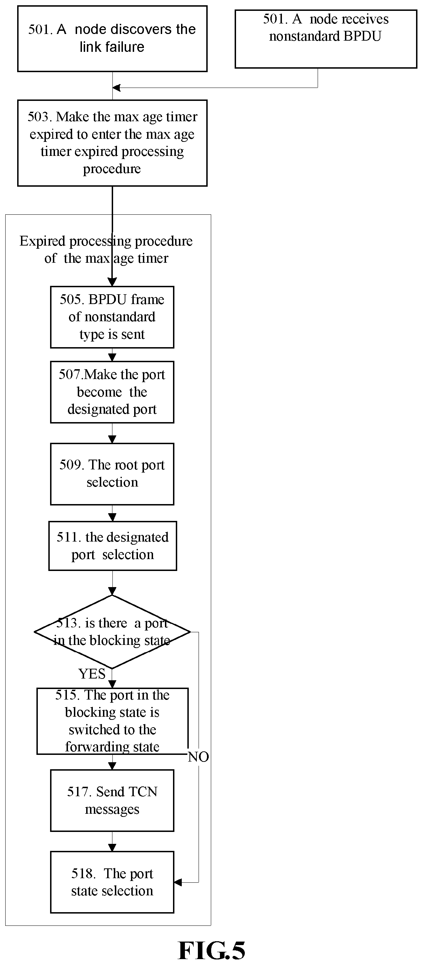

Fig. 5 shows the flowchart of the method for rebuilding single ring network topology according to the preferred embodiment of the invention. As shown in Fig. 5, the method for rebuilding single ring network topology according to the preferred embodiment of the invention comprises the following processing (S501-S519):
S501: One node in the single ring network detects a link failure or the node receives a nonstandard BPDU (self-defined BPDU) message, wherein, the node has no blocking port.
S503: The node makes the max age timer expired to enter the max age timer expired processing procedure.
S505: The BPDU message (frame) of nonstandard type is sent.
S507: The port is designated as the designated port.
S509: The reelection for the root port is performed.
S511: The reelection for the designated port is performed.
S513: The node judges whether there is a port in the blocking state, if so, executes S515, otherwise, executes S519;
   preferably, if the node has no port in the blocking state, the BPDU of nonstandard type is sent through the designated port of the node, other nodes make the max age timers thereof expired after receiving the BPDU of such type, this process is repeated until there is a node having a port in the blocking state.
S515: The node having the blocking port switches the state of the port in the blocking state into the forwarding state.
S517: The node having the blocking port continues to send a TCN message to the next node, wherein the message is used for notifying other nodes in the network with the information that the link is failed.
S519: The node having the non-blocking port allocates the port state.

Through above embodiments, during the network topology rebuilding process, each node actively detects the link failure, then actively transfers the topology change information to the network, and finally actively changes the port state, during the specific implementation process, when the solution is applied in a network bridge having a dominant frequency of 200MHz and using PPC as CPU and Linux as the operating system, the speed of rebuilding network topology is about second level. Therefore, it can be known that, during the single ring network topology rebuilding process, the application of the solution can effectively shorten the topology rebuilding time, and accelerate the STP convergence speed.

### Embodiments of the system

A system for rebuilding single ring network topology is also provided According to the embodiment of the invention.

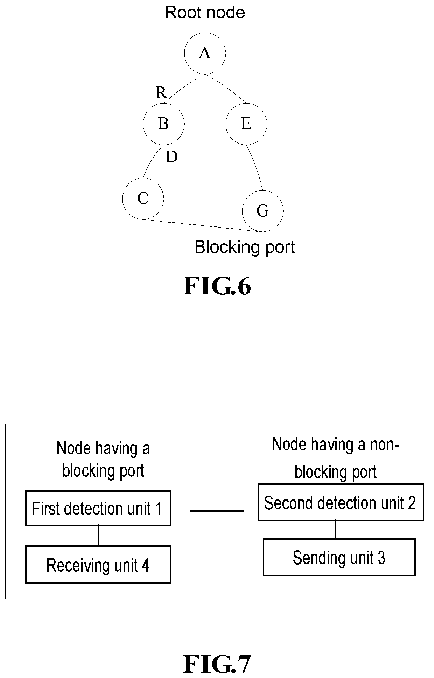

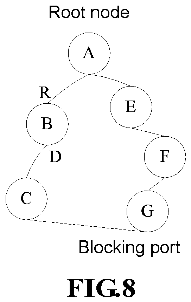

Fig. 6 shows the structure diagram of the system for rebuilding single ring network topology according to the embodiments of the invention; Fig. 7 shows the function structure block diagram of the nodes in the single ring network according to the preferred embodiment of the invention; and Fig. 8 shows the structure diagram of the system for rebuilding single ring network topology according to the preferred embodiment of the invention.

As shown in Fig. 6, the system for rebuilding single ring network topology according to the embodiments of the invention comprises: a plurality of nodes (five nodes are taken as example in the figure: node A, node B, node C, node G and node E), wherein the plurality of nodes comprise a node (node G) having a blocking port, other nodes are nodes having a non-blocking port. Description will be given below with reference to Fig. 7 and Fig. 8.

Wherein, the plurality of nodes are used for detecting, at a predetermined time interval, whether the link connected with the root port of the present node is failed;
the node having the blocking port in the plurality of nodes is used for, when one node in the single ring network detects a link failure, obtaining the information that the link failure occurs in the single ring network, and switching the state of the port in a blocking state to a forwarding state.

Preferably, as shown in Fig. 7, in terms of functions, the node having the blocking port in the single ring network may comprises a first detection unit 1 used for detecting whether the link connected with the root port of the present node is failed.

Preferably, as shown in Fig. 7, in terms of functions, the node having the non-blocking port may comprise: a second detection unit 2 and a sending unit 3. Wherein, the second detection unit 2 is used for detecting whether the link connected with the root port of the present node is failed; and the sending unit 3 is used for transmitting a self-defined BPDU message to the next node through a reelected designated port. Preferably, as shown in Fig. 7, in terms of functions, the node having the blocking port in the single ring network further comprises a receiving unit 4 used for receiving the self-defined BPDU message, wherein the self-defined BPDU message is sent by the node having the non-blocking port.

Preferably, as shown in Fig. 8, the plurality of nodes in the system for rebuilding single ring network topology are used for, when the port state of any one node in the plurality of nodes changes, directly switching the blocking state to the forwarding state through the listening state.

For example, as shown in Fig. 8, for a case in which the port state of the node changes, one or more nodes (one node is shown in the figure: node F) are to be added in the single ring network, when the port state of node F changes, the blocking state is directly switched to the forwarding state through the listening state.

A system for rebuilding single ring network topology is provided according to above embodiments, and the system comprises nodes having a blocking port and nodes having a non-blocking port; each node actively detects the link failure, then actively transfers the topology change information to the network, and finally actively changes the port state, so that the topology rebuilding time is shortened greatly.

In conclusion, through the solution for rebuilding single ring network topology provided by the embodiments of the invention, during the network topology rebuilding, each node first actively detects the link failure, then actively transfers the topology change information to the network, and finally actively changes the port state, so that the problem of slow convergence speed during the STP-based network topology rebuilding in the traditional art is solved. Further, the passive wait for obtaining the link failure can be changed into the active detection for the link failure, and the state of the port in the blocking state is directly switched to the forwarding state. Therefore, the topology rebuilding time is shortened greatly, and the convergence speed is accelerated.

In addition, the implementation of the invention has no modification for the system architecture and the present processing procedure. Therefore, it is easy to implement and convenient to popularize in the technical field, and the invention has high industrial applicability.

Apparently, those skilled in the art should understand, each foregoing module or each step of the present invention can be realized with general computing devices; they can be centralized on a single computing device or distributed in the network consisting of several computing devices; alternatively, they can be realized through program codes that can be executed by computing devices so that they can be stored in storage devices and executed by computing devices, or they can be manufactured as each integrated circuit module respectively, or several modules or steps of them can be manufactured as a single integrated circuit. In this way, the present invention is not limited to any specific combination of hardware and software.

## Claims

1. A method for rebuilding single ring network topology, comprising:
each node in a single ring network detecting, at a predetermined time interval, whether a link connected with a root port of the node is failed;
when one node in the single ring network detects the link failure, the node having a blocking port obtaining information that the link failure occurs in the single ring network;
the node having the blocking port switching a state of the port from a blocking state to a forwarding state;
wherein the step that the node having the blocking port obtaining the information that the link failure occurs in the single ring network comprises:
the node having the blocking port detecting that the link connected with the root port of the node is failed; or
a node having a non-blocking port detecting that the link connected with the root port of the node is failed; the node having the non-blocking port transmitting a self-defined bridge protocol data unit (BPDU) message through a designated port to a next node, if the next node has not a blocking port, then the next node make a max age timer expired after receiving the self-defined BPDU, this transmission process is repeated until the node having the blocking port receiving the BPDU message and acquiring the information that the link failure occurs in the network
for any one node in the single ring network, when the port state of the node changes, the state conversion process is that: the blocking state is directly switched to a forwarding state through a listening state.

2. The method according to claim 1, **characterized in that** a plurality of fields for identifying type included in the self-defined BPDU message are different from those included in a standard BPDU message.

3. A system for rebuilding single ring network topology, comprising a plurality of nodes, which comprise a node having a blocking port, wherein,
the plurality of nodes, configured to detect at a predetermined time interval whether a link connected with a root port of the node is failed;
the node having the blocking port, configured to obtain information that a link failure occurs in the single ring network, when one node in the single ring network detects the link failure, and to switch a state of the port from a blocking state to a forwarding state;
wherein the node having the blocking port comprises:
a first detection unit (1), configured to detect whether the link connected with the root port of the node is failed;
a node having a non-blocking port in the plurality of nodes comprises:
a second detection unit (2), configured to detect whether the link connected with the root port of the node is failed;
a sending unit (3), configured to transmit a self-defined bridge protocol data unit (BPDU) message to a next node through a reelected designated port;
the node having the blocking port further comprises:
a receiving unit (4), configured to receive the self-defined BPDU message;
the plurality of nodes, configured to switch the blocking state to a forwarding state through a listening state directly, when a port state of any one node in the plurality of nodes changes.

## Patentansprüche

1. Verfahren zum Wiederaufbau einer einzelnen Ringnetz-Topologie, umfassend:
Nachweis, durch jeden Knoten in einem einzelnen Ringnetz, in einem vorbestimmten Zeitintervall, ob ein Link, verbunden mit einem Root Port des Knotens, ausgefallen ist;
wenn ein Knoten im einzelnen Ringnetz den Linkausfall feststellt, Erhalt, durch den Knoten, aufweisend einen Blockier-Port, von Informationen, dass der Linkausfall im einzelnen Ringnetz stattfindet;
Schalten, durch den Knoten, aufweisend den Blockier-Port, eines Zustands des Ports von einem Blockierzustand in einen Weiterleitungszustand;
wobei der Schritt, des Erhaltens durch den Knoten, aufweisend einen Blockier-Port, von Informationen, dass der Linkausfall im einzelnen Ringnetz stattfindet, Folgendes umfasst:
den Nachweis, durch den Knoten, aufweisend den Blockier-Port, dass der Link, der mit dem Root Port des Knotens verbunden ist, ausgefallen ist; oder
den Nachweis, durch einen Knoten, aufweisend einen Nicht-Blockier-Port, dass der Link, verbunden mit dem Root Port des Knotens, ausgefallen ist; die Übertragung, durch den Knoten, aufweisend den Nicht-Blockier-Port, einer selbst definierten Bridge Protocol Data Unit (BPDU)-Meldung durch einen bezeichneten Port an einen nächsten Knoten, wenn der nächste Knoten keinen Blockier-Port aufweist, dann der nächste Knoten einen Max Age Timer ablaufen lässt, nachdem die selbst definierte BPDU empfangen wurde, dieser Übertragungsprozess wird wiederholt, bis der Knoten, aufweisend den Blockier-Port, die BPDU-Meldung empfängt und die Information erfasst, dass der Linkausfall im Netzwerk stattfindet,
für jeden Knoten im einzigen Ringnetz, wenn sich der Port-Zustand des Knotens ändert, ist der Zustand des Umwandlungsprozesses: der Blockierzustand ist direkt in einen Weiterleitungszustand durch einen Hörzustand geschaltet.

2. Verfahren nach Anspruch 1, **dadurch gekennzeichnet, dass** eine Vielzahl von Feldern zur Identifizierung der Art, enthalten in der selbstdefinierten BPDU-Meldung, verschieden von denjenigen sind, die in einer standardmäßigen BPDU-Meldung enthalten sind.

3. System zum Wiederaufbau einer einzelnen Ringnetz-Topologie, umfassend eine Vielzahl von Knoten, die einen Knoten mit einem Blockier-Port umfassen, wobei
die Vielzahl von Knoten konfiguriert ist, um in einem vordefinierten Zeitintervall nachzuweisen, dass ein Link, verbunden mit dem Root Port des Knotens, fehlgeschlagen ist;
der Knoten mit dem Blockier-Port konfiguriert ist, um Information zu erhalten, dass ein Linkausfall im einzelnen Ringnetz stattfindet, wenn ein Knoten im einzelnen Ringnetz den Linkausfall feststellt, und einen Zustand des Ports von einem Blockierzustand in einen Weiterleitungszustand zu schalten;
wobei der Knoten, aufweisend den Blockier-Port Folgendes umfasst:
eine erste Nachweiseinheit (1), die konfiguriert ist, um nachzuweisen, dass der Link, verbunden mit dem Root Port des Knotens, ausgefallen ist;
ein Knoten, aufweisend einen Nicht-Blockier-Port in der Vielzahl von Knoten, Folgendes umfasst:
eine zweite Nachweiseinheit (2), die konfiguriert ist, um nachzuweisen, ob der Link, verbunden mit dem Root Port des Knotens, ausgefallen ist;
eine Sendeeinheit (3), die konfiguriert ist, um eine selbst definierte Bridge Protocol Data Unit (BPDU)-Meldung an einen nächsten Knoten durch einen wieder gewählten bezeichneten Port zu übertragen;
der Knoten, aufweisend den Blockier-Port, weiter Folgendes umfasst:
eine Empfangseinheit (4), die konfiguriert ist, um die selbstdefinierte BPDU-Meldung zu empfangen;
die Vielzahl von Knoten, die konfiguriert ist, um den Blockierzustand direkt in einen Weiterleitungszustand zu schalten, wenn sich ein Port-Zustand eines der Knoten in der Vielzahl von Knoten ändert.

## Revendications

1. Procédé pour reconstruire une topologie de réseau à anneau unique, comprenant :
la détection, par chaque noeud dans un réseau à anneau unique, à un intervalle de temps prédéterminé, si une liaison connectée à un port racine du noeud est défaillante ;
quand un noeud dans le réseau à anneau unique détecte la défaillance de liaison, l'obtention, par le noeud ayant un port bloquant, d'informations indiquant que la défaillance de liaison se produit dans le réseau à anneau unique ;
la commutation, par le noeud ayant le port bloquant, d'un état du port d'un état de blocage à un état de transmission ;
dans lequel l'étape d'obtention, par le noeud ayant le port bloquant, des informations indiquant que la défaillance de liaison se produit dans le réseau à anneau unique comprend :
la détection, par le noeud ayant le port bloquant, que la liaison connectée au port racine du noeud est défaillante ; ou
la détection, par un noeud ayant un port non bloquant, que la liaison connectée au port racine du noeud est défaillante ; la transmission, par le noeud ayant le port non bloquant, d'un message d'unité de données de protocole de pont (BPDU) auto-définie par le biais d'un port désigné à un noeud suivant, si le noeud suivant n'a pas un port bloquant, alors le noeud suivant fait expirer un temporisateur d'âge maximum après réception de la BPDU auto-définie, ce processus de transmission est répété jusqu'à ce que le noeud ayant le port bloquant reçoive le message BPDU et acquière les informations indiquant que la défaillance de liaison se produit dans le réseau
pour un quelconque noeud dans le réseau à anneau unique, quand l'état de port du noeud change, le processus de conversion d'état est que : l'état de blocage est commuté directement à un état de transmission par l'intermédiaire d'un état d'écoute.

2. Procédé selon la revendication 1, **caractérisé en ce qu'**une pluralité de champs pour identifier un type comprise dans le message de BPDU auto-définie est différente de ceux compris dans un message BPDU standard.

3. Système pour reconstruire une topologie de réseau à anneau unique, comprenant une pluralité de noeuds, qui comprennent un noeud ayant un port bloquant, dans lequel
la pluralité de noeuds est configurée pour détecter à un intervalle de temps prédéterminé si une liaison connectée à un port racine du noeud est défaillante ;
le noeud ayant le port bloquant étant configuré pour obtenir des informations indiquant que la défaillance de liaison se produit dans le réseau à anneau unique, quand un noeud dans le réseau à anneau unique détecte la défaillance de liaison, et pour commuter d'un état du port d'un état de blocage à un état de transmission ;
dans lequel le noeud ayant le port bloquant comprend :
une première unité de détection (1) configurée pour détecter si la liaison connectée au port racine du noeud est défaillante ;
un noeud ayant un port non bloquant dans la pluralité de noeuds comprend :
une deuxième unité de détection (2) configurée pour détecter si la liaison connectée au port racine du noeud est défaillante ;
une unité de transmission (3) configurée pour transmettre un message d'unité de données de protocole de pont (BPDU) auto-définie à un noeud suivant par le biais d'un port désigné réélu ;
le noeud ayant le port bloquant comprend en outre :
une unité de réception (4) configurée pour recevoir le message de BPDU auto-définie ;
la pluralité de noeuds étant configurée pour commuter directement l'état de blocage à un état de transmission par l'intermédiaire d'un état d'écoute, quand un état de port d'un quelconque noeud dans la pluralité de change.
